# EUROPEAN PATENT SPECIFICATION

(11) **EP 1 923 700 B1**
(45) Date of publication and mention of the grant of the patent: **11.12.2013**
(21) Application number: 06807874.0
(22) Date of filing: 20.07.2006
(51) Int. Cl.: G01N 27/82, D07B 7/08, B66B 7/12

(54) **DEVICE FOR THE CONTINUOUS, PERMANENT MONITORING OF STEEL CABLES USED IN INSTALLATIONS FOR THE TRANSPORT OR LIFTING OF PEOPLE AND MATERIALS**
VORRICHTUNG ZUR KONTINUIERLICHEN PERMANENTEN ÜBERWACHUNG VON STAHLSEILEN VON ANLAGEN ZUM TRANSPORTIEREN ODER HEBEN VON PERSONEN UND MATERIALIEN
DISPOSITIF DE COMMANDE PERMANENTE ET CONTINUE DES CABLES D'ACIER UTILISES DANS LES INSTALLATIONS DE TRANSPORT OU DE LEVAGE DE PERSONNEL ET DE MATERIAUX

(30) Priority: 26.07.2005 ES 200501832
(43) Date of publication of application: 21.05.2008
(73) Proprietor: Fundacion Barredo, 33600 Mieres Asturias (ES)
(72) Inventor: BERJANO SERRANO, Santiago, E-33600 Mieres. Asturias (ES); GONZALEZ GARCIA, Juan Carlos, E-33600 Mieres. Asturias (ES); MUÑIZ COALLA, Miguel, E-33600 Mieres. Asturias (ES)
(74) Representative: Garcia-Cabrerizo y del Santo, Pedro Maria
(86) International application number: PCT/ES2006/000426
(87) International publication number: WO 2007/012685

(56) References cited:
- WO-A1-98/20335
- FR-A1- 2 405 483
- GB-A- 1 270 748
- JP-A- 2000 241 393
- JP-A- 2003 050 230
- JP-A- 2003 050 230
- US-A- 2 582 437
- US-A- 4 538 107
- US-A- 5 402 066

## Description

### OBJECT OF THE INVENTION

The present invention relates to a device whose permanent installation on steel cables used in transport or lifting installations permits the continuous monitoring thereof by the personnel responsible for these installations, identifying defects or damage in said cables.

The use of this device means that information about the state of the cables is available at all times, increasing the degree of safety of the installations.

### BACKGROUND

There are numerous steel cable monitoring devices based on principles of magnetic induction. WO 98/20335 discloses a magnetic flux leakage detection for a cable, permanent magnets to generate the field, multiple units of sensor coils used to determine state of the cable and means for measuring the relative speed of the cable. However, these devices present design characteristics that make them inappropriate for their permanent installation in steel cable transport installations. Moreover, there is no known device that presents modular elements, making it possible to adjust the diameter of the cable without a loss of sensitivity in the detection.

The position of defects or damage along the cable is identified by inductive magnetic devices for monitoring steel cables through the use of an encoder, tachometers or other means, but always with the presence of moving parts, which are highly subject to mechanical wear. Therefore, said position is not identified through the use of inductive sensors that in turn provide information about damage or defects in the cable. They are not sufficiently versatile with regard to the possibility of installing a different type of inductive sensors in each case, according to the information to be obtained for each steel cable under inspection: radial sensors, axial sensors or indirect measurement sensors.

In addition to these constructive aspects, there are also two operational aspects; on the one hand, the availability at all times of specialised personnel with sufficient technical training to handle and interpret the inductive magnetic devices, and on the other hand, the need to change the normal rate of work on the installation (ski lifts, chair lifts, cable cars, etc.) on which the device has been assembled, due to all the difficulties of use: securing the device, assembling the monitoring units, signal cables, monitoring the cable at a certain speed, etc.

This new device whose characteristics are the object of the present invention has been devised due to this large amount of limitations on the existing devices.

### DESCRIPTION OF THE INVENTION

The device for the continuous, permanent monitoring of steel cables consists of an inductive magnetic head, with a set of permanent magnets installed in such a way that they generate a magnetic field flux therebetween through the steel cable that is being monitored. In turn, inductive-type sensors are installed, which generate an electric field that is measured to obtain information about whether or not there are defects or damage in the steel cables.

The device disclosed herein is characterised by its modular arrangement, which makes it possible vary the number of magnets, the type of inductive sensor to be used and to adjust the device to the diameter of each cable, without a loss of sensitivity in the detection of defects or damage in the steel cables.

This device is most effectively adapted to a permanent use thereof in installations, as it does not include moving elements, such as encoders or tachometers, to identify the position of defects or damage that might be found along the cable. Said position is identified by comparing the signals generated by two sets of inductive radial-type sensors, which are included in the device.

### DESCRIPTION OF THE DRAWINGS

To ensure a correct understanding of the description, it is accompanied by a set of drawings with the purpose of schematising the operation and situation of the elements that make up the present invention.
Figure 1 shows an overall scheme of the device, which summarises the operation thereof, with the flux lines, magnets and other elements.
Figures 2 and 3 show a radial sensor and an axial sensor, respectively.
Figure 4 shows a longitudinal cross-section of the device, showing its main elements.
Figure 5 shows those same internal elements in a three-dimensional view.
Figure 6 shows the system by which the signal obtained by the device is transmitted to a computer.

### PREFERRED EMBODIMENT OF THE INVENTION

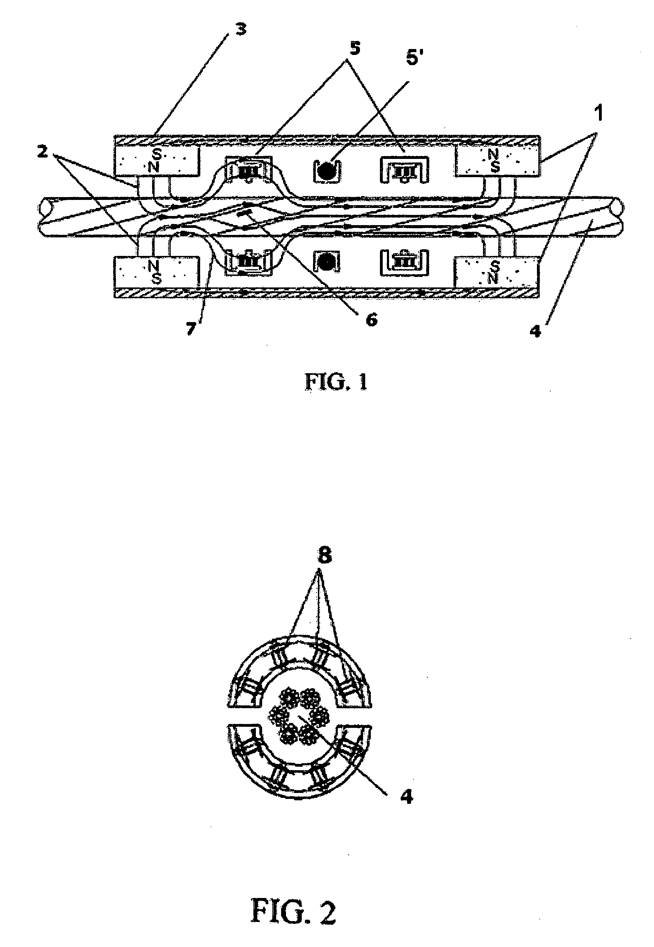

The device for the continuous, permanent monitoring of steel cables is an inductive magnetic head, Figure 1, which consists of two permanent magnet modules (1) installed in such a way that they generate a magnetic field (2) flux, which circulates through the anvils (3) and is closed along the steel cable (4) that is being monitored. Different units of inductive sensors (5, 5') are installed between these modules, surrounding the cable, from which it is possible to obtain information about both the state of the cable and the position of defects or damage that might be found along it.

The magnets are assembled in each of the modules, with the same number at the top and the bottom. The magnets of both modules are joined in pairs by the anvil, and their poles are oriented in such a way that a magnetic flux is generated through the cable from one module to another. Inserted between the two magnet modules are the different radial or axial sensor units, in which an electric field is generated as the cable moves therethrough. The measurement of this electric field generated in the sensors provides information about the state of the cable and the position of defects or damage found along it.

If any type of defect, such as a broken wire, corrosion, wear, etc. (6), is found in the steel cable, there is a distortion in the magnetic field flux (7) that causes an appreciable change in the electric field values generated in the inductive sensors installed in the device.

The radial-type inductive sensors (5), Figure 2, consist of a set of coils (8) connected in series with their axes perpendicular to the cable (4), totally surrounding it.

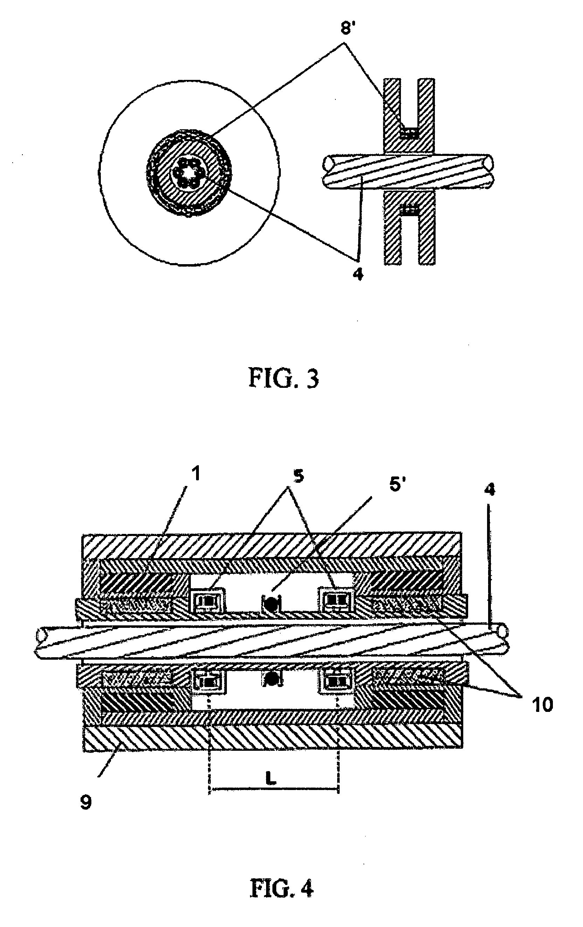

The axial-type inductive sensors (5'), Figure 3, consist of a single coil (8') surrounding the cable (4), which forms its core. This sensor is situated in the centre of the electromagnetic device, between the two magnet modules.

The essential characteristics of this device, Figure 4, consist of its modular design, which makes it possible to change the number of magnets used (1), the number needed to achieve the magnetic saturation of the cable, the type of inductive sensors used, radial (5), axial (5') or indirect measurement, and the casing (9) that protects and supports the device as appropriate for the cable (4).

In cases where the cable under inspection has a small diameter, since it is at a great distance from the magnets, it may be that the cable is not sufficiently magnetically saturated, even if all the possible magnets are assembled, which would have a negative influence on the results obtained. To avoid this problem, the device has been designed in such a way that it is possible to assemble a set of iron pieces (10), called concentrators, between the magnets and the cable, thus facilitating the course of the flux lines.

All these elements have made it possible to make the device very versatile, as it is possible to adjust it so that it adapts to different working conditions, configuring it in such a way that it is as sensitive as possible in the detection of possible irregularities in the cable.

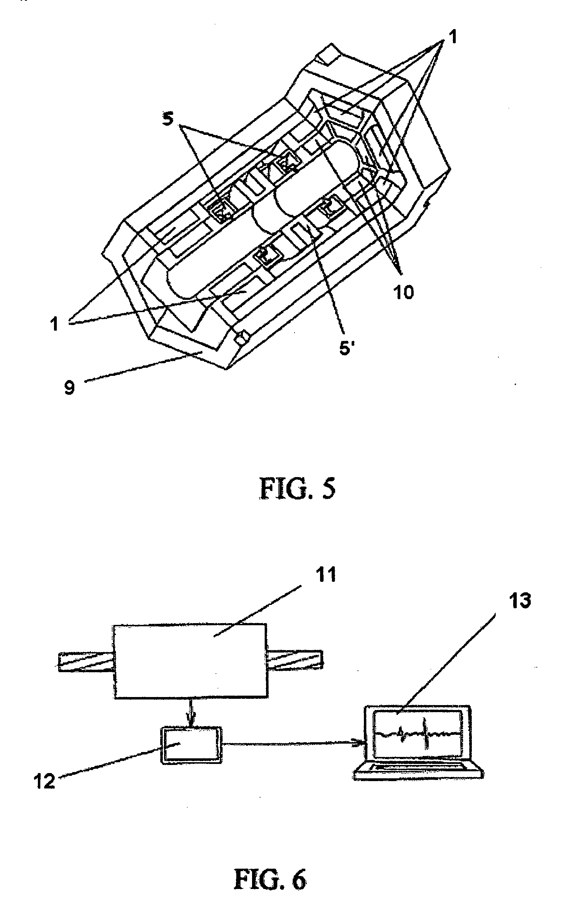

To complement the above, Figure 5 shows a three-dimensional cross section, in which the distribution of each of the elements that make up the device can be observed: magnets (1), radial sensors (5), axial sensor (5'), protective casing of the device (9) and lastly, the magnetic flux concentrators (10), which are assembled in cases where the cable under inspection has a small diameter, as is the case in the configuration shown here.

In the existing inductive magnetic devices that are available on the market, defects or damage in a steel cable are detected by means of a single inductive sensor, either for radial magnetic field fluxes or for axial fluxes, the speed, and thereby the position of each defect, being determined by an encoder or tachometer. The use of these systems, made from moving parts, in a continuous inspection device presents numerous problems (wear of the wheel, high-speed slipping, the need for periodic calibrations, etc.), making them totally unviable in practice.

To overcome these drawbacks, the device disclosed herein, Figure 4, has two radial-type inductive sensors (5) of the same characteristics, which are installed at a certain distance (L) from each other. These sensors send two similar signals with the phase difference corresponding to the separation between them.

By comparing the two signals and taking into account the sampling frequency, it is possible to determine the speed at which the cable is moving. The position of defects along the cable can then be identified on the basis of the speed value.

Should a radial inductive sensor be chosen to detect irregularities in steel cables, one of the sensors used to determine the speed takes on this function in the device.

To summarise, the application of radial inductive sensors in identifying the position of the irregularities detected along the length of the cable and the versatility in adapting the device to the diameter of the cable enable the continuous, permanent adaptability of this device in any type of installation. This system also provides the advantage of not needing any kind of maintenance, an aspect that would be required in the case of positioning systems using moving devices (encoders, tachometers, etc.).

For the reading and analysis of the different electrical signals, Figure 6, provided by the corresponding sensor elements situated inside the inductive magnetic device (11), it is connected to a data acquisition device (12), from which the signal is sent to a computer (13).

The information collected by the computer is processed by a specific software program, which keeps the operator or person responsible for the installation informed about the state of the cable at all times. Furthermore, through this software, the device provides warning signals when it detects a specific or local defect along the cable, indicating its position.

All this information received by the operator or person responsible for the installation considerably increases the degree of safety of the installation with regard to possible accidents caused by the steel cables breaking.

It also has the significant advantage of said operator not requiring any specific training, as he or she does not have to interpret the signal received by the system, but only needs to observe the results shown on the monitor and act accordingly should there be a warning, following the safety criteria established for the installation. In other words, it is the software itself that interprets the signal.

By using software for processing and interpreting the signal, it is possible to customise it for the user. Some of these configurations are based on an analysis of the monitoring records kept for the steel cable under inspection, making it possible to observe its evolution and thereby predict possible breakages or other problems in the cable, such as the detection of stress phenomena or the detection of suspicious points due to a negative evolution in terms of an increase of broken wires over time. On the basis of all this, a plan of rejection criteria can be drawn up according to the applicable legislation.

## Claims

1. DEVICE FOR THE CONTINUOUS, PERMANENT MONITORING OF STEEL CABLES (4) USED IN INSTALLATIONS FOR THE TRANSPORT OR LIFTING OF PEOPLE AND MATERIALS, of the type consisting of an inductive magnetic head, which includes sensors (5, 5') to detect variations in the magnetic field (2), **characterised in that** said head is made up of two permanent magnets modules (1) joined by iron anvils (3) that make it possible to form, together with the cable (4) under inspection, a closed magnetic circuit; wherein different units of inductive sensors (5, 5') are assembled between said modules (1) consisting of coils (8, 8') in which an electric field is generated as the cable moves along it, said sensors (5, 5') including an axial-type inductive sensor (5') between the magnet modules (1), which consists of a coil (8') that surrounds the cable (4), and two radial-type sensors (5) of the same characteristics, consisting of coils (8) connected in series with their axes perpendicular to the cable (4), flanking it and situated at a certain distance from each other; the device comprising:
means to receive signals from the two radial-type inductive sensors (5) of the same characteristics which are installed at a certain distance from each other, whereby the sensors (5) send two similar signals with a phase difference corresponding to the distance between the sensors (5);
means for comparing the two signals and taking into account a sampling frequency, determine a speed value at which the cable (4) is moving and a position of defects (6) along the cable (4) on the basis of the speed value.

2. DEVICE FOR THE CONTINUOUS, PERMANENT MONITORING OF STEEL CABLES (4) USED IN INSTALLATIONS FOR THE TRANSPORT OR LIFTING OF PEOPLE AND MATERIALS, according to claim 1, **characterised in that**, to achieve the necessary magnetic saturation, the number of magnets that comprises each of the modules (1) of which the head consists is variable; and **in that**, if necessary, said head is also suitable for including concentrators (10), consisting of iron pieces that facilitate the course of the magnetic flux lines.

3. DEVICE FOR THE CONTINUOUS, PERMANENT MONITORING OF STEEL CABLES (4) USED IN INSTALLATIONS FOR THE TRANSPORT OR LIFTING OF PEOPLE AND MATERIALS, according to claim 1 to 2, **characterised in that** it is connected to a data acquisition device (12), from which the continuous monitoring signal is transmitted to a computer (13), on which suitable software is used to directly interpret the signal obtained, without the need for specialised personnel to interpret it.

## Patentansprüche

1. Vorrichtung zum kontinuierlichen, permanenten Überwachen von Stahlkabeln (4), die in Einrichtungen zum Transportieren oder Heben von Personen und Materialien verwendet werden, derart bestehend aus einem induktiven Magnetkopf, welcher Sensoren (5, 5') zum Erfassen von Änderungen des Magnetfelds (2) beinhaltet, **dadurch gekennzeichnet, dass** der genannte Kopf aus zwei Permanentmagnetmodulen (1) aufgebaut ist, die durch Eisenambosse (3) verbunden sind, die es möglich machen, zusammen mit dem zu untersuchenden Kabel (4) einen geschlossenen Magnetkreislauf zu bilden; wobei verschiedene Einheiten von Induktionssensoren (5, 5') zwischen den genannten Modulen (1) zusammengefügt sind, die aus Spulen (8, 8') bestehen, in welchen ein elektrisches Feld erzeugt wird, wenn sich das Kabel entlang derselben bewegt, wobei die genannten Sensoren (5, 5') einen axialen Induktionssensor (5') zwischen den Magnetmodulen (1) beinhalten, welcher aus einer Spule (8') besteht, die das Kabel (4) umgibt, und zwei radiale Sensoren (5) mit denselben Merkmalen, die aus Spulen (8) bestehen, die mit ihren zum Kabel (4) senkrechten Achsen in Serie geschaltet sind, wobei sie an dieses angrenzen und mit einem gewissen Abstand voneinander gelegen sind; wobei die Vorrichtung Folgendes umfasst:
Mittel zum Erhalten von Signalen von den beiden radialen Induktionssensoren (5) mit denselben Merkmalen, welche mit einem gewissen Abstand voneinander installiert sind, wobei die Sensoren (5) zwei ähnliche Signale mit einer dem Abstand zwischen den Sensoren (5) entsprechenden Phasendifferenz senden;
Mittel zum Vergleichen der beiden Signale und Berücksichtigen einer Abtastfrequenz, zum Bestimmen eines Geschwindigkeitswerts, mit dem sich das Kabel (4) bewegt, und einer Position von Störungen (6) entlang des Kabels (4) auf Grundlage des Geschwindigkeitswertes.

2. Vorrichtung nach Anspruch 1 zum kontinuierlichen, permanenten Überwachen von Stahlkabeln (4), die in Einrichtungen zum Transportieren oder Heben von Personen und Materialien verwendet werden, **dadurch gekennzeichnet, dass** zum Erreichen der notwendigen magnetischen Sättigung die Anzahl an Magneten, welche jedes der Module (1), aus denen der Kopf besteht, umfasst, variabel ist; und dass, falls nötig, der genannte Kopf auch geeignet ist, Konzentratoren (10) zu beinhalten, die aus Eisenstücken bestehen, welche den Verlauf der Magnetflusslinien erleichtern.

3. Vorrichtung nach Anspruch 1 bis 2 zum kontinuierlichen, permanenten Überwachen von Stahlkabeln (4), die in Einrichtungen zum Transportieren oder Heben von Personen und Materialien verwendet werden, **dadurch gekennzeichnet, dass** sie mit einer Datenaufnahmevorrichtung (12) verbunden ist, von welcher das Signal zum kontinuierlichen Überwachen zu einem Computer (13) übertragen wird, auf welchem eine geeignete Software zur direkten Interpretation des erhaltenen Signals verwendet wird, ohne dass dieses von Fachpersonal interpretiert werden muss.

## Revendications

1. Dispositif de commande permanente et continue des câbles d'acier (4) utilisés dans les installations de transport ou de levage de personnel et de matériaux, du genre consistant en une tête d'induction magnétique, qui comprend des capteurs (5, 5') pour détecter des variations dans le champ magnétique (2), **caractérisé en ce que** ladite tête est formée par deux modules d'aimants permanents (1) reliés par des enclumes en fer (3) qui rendent possible former, conjointement avec le câble (4) à inspecter, un circuit magnétique fermé; dans lequel des différentes unités de capteur d'induction (5, 5') sont assemblées entre lesdits modules (1) consistants en des bobines (8, 8') dans lesquelles un champ électrique est généré au fur et à mesure que le câble bouge le long de celui-ci, lesdits capteurs (5, 5') comprenant un capteur (5') d'induction de type axial, entre les modules d'aimants, qui consiste en une bobine (8') qui entoure le câble (4), et deux capteurs (5) de type radial, ayant les mêmes caractéristiques, consistant en des bobines (8) connectées en série avec leurs axes perpendiculaires au câble (4), l'encadrant et situées à une certaine distance les unes des autres ; le dispositif comprenant ;
des moyens pour recevoir des signaux des deux capteurs (5) d'induction de type radial, ayant les mêmes caractéristiques et qui sont installés à une certaine distance les uns des autres, selon lesquels les capteurs (5) envoient deux signaux similaires avec une différence de phase correspondante à la distance entre les capteurs (5) ;
des moyens pour comparer les deux signaux et prendre en considération une fréquence d'échantillonnage, déterminant une valeur de vitesse à laquelle le câble (4) est en train de bouger et une position des défauts (6) le long du câble (4) sur la base de la valeur de vitesse.

2. Dispositif de commande permanente et continue des câbles d'acier (4) utilisés dans les installations de transport ou de levage de personnel et de matériaux, selon la revendication 1, **caractérisé en ce que** pour obtenir la saturation magnétique nécessaire, le nombre d'aimants compris dans chacun des modules (1) conformant la tête est variable; et **en ce que**, si nécessaire, ladite tête est aussi apte pour inclure des concentrateurs (10), consistant en des pièces en fer qui facilitent le parcours des lignes de flux magnétique.

3. Dispositif de commande permanente et continue des câbles d'acier (4) utilisés dans les installations de transport ou de levage de personnel et de matériaux, selon les revendications 1 à 2, **caractérisé en ce qu'**il est connecté à un dispositif d'acquisition de données (12), dont le signal de commande continue est transmis à un ordinateur (13), sur lequel on emploie un logiciel approprié afin d'interpréter directement le signal obtenu, sans qu'il soit nécessaire de personnel spécialisé pour l'interpréter.
